# EUROPEAN PATENT SPECIFICATION

(11) **EP 1 242 757 B1**
(45) Date of publication and mention of the grant of the patent: **06.10.2004**
(21) Application number: 00986152.7
(22) Date of filing: 11.12.2000
(51) Int. Cl.: F16H 23/04, F04B 1/14, F03C 1/06

(54) **HYDRAULIC AXIAL-PISTON MACHINE**
HYDRAULIK-AXIALKOLBENMASCHINE
MACHINE HYDRAULIQUE A PISTONS AXIAUX

(30) Priority: 20.12.1999 SE 9904671
(43) Date of publication of application: 25.09.2002
(73) Proprietor: Kanzoghi, Mahmoud, 941 39 Pitea (SE)
(72) Inventor: Kanzoghi, Mahmoud, 941 39 Pitea (SE)
(74) Representative: Karlsson, Leif Karl Gunnar
(86) International application number: PCT/SE2000/002490
(87) International publication number: WO 2001/046559

(56) References cited:
- DE-A1- 19 639 732
- FR-A- 1 073 331
- FR-A- 1 416 219
- GB-A- 2 030 254
- US-A- 588 606
- US-A- 2 335 415
- US-A- 4 491 057
- US-E- R E15 442

## Description

The present invention relates to a hydraulic axial-piston machine of the type described in the preamble to claim 1.

Machines of this type may work as either a pump, in which case the driving torque is applied to a shaft in order to achieve pumping in the axially directed cylinders, or as a motor, in which case liquid under pressure is introduced into the cylinders which thereby set the shaft in rotation. Machines of this type have been known for a long time. Examples can be found in DE 196 39 732, US 4,106,354, US 4,491,087 which comprises the features mentionned in the preamble of claim 1, GB 2 030 254, FR 1.073.331, GB 588,606, FR 1.416.219, GB 662,190 and DE 25 34 688. US 15 442 and DE 196 39732 describe a machine having pistons arranged on each side of a dise, the piston on different sides of the disc being arranged in pairs axially in line with each other and the pistons in pair being mechanically connected to each other.

Transmission of the rotary movement of the main shaft to the to-and-fro movement of the pistons, or vice versa, causes friction losses and requires a plurality of co-operating movement-transmitting mechanisms. A machine of this type is therefore often complicated and sensitive to disturbance.

The object of the invention is to provide such a machine with small friction losses, which is at the same time simple and reliable.

This object has been achieved in accordance with the invention by providing a hydraulic machine of the type described in the preamble to claim 1 with the special features as defined in the characterizing part of the claim.

Thanks to the special connection and the bearing between the driving shaft and the inclined shaft end, the transmission of the rotary movement of the driving shaft to the tilting movement of the disc, or vice versa, occurs with a minimum of friction. The special transmission of movement between the tilting disc and the axial pistons also causes low friction resistance. The connection between driving shaft and the tilting disc is achieved with few parts so that the whole arrangement is simple and reliable.

By arranging the pistons axially in pairs, as proposed in accordance with the present invention, the resultant forces acting between the disc and the piston rods is balanced. The reduced need for taking up such unbalanced forces offers greater freedom in optimising the machine from other aspects as well. It is primarily the bearing and the friction forces associated with the bearing that constitute a problem in conventional machines of this type, where a large number of components describe different movement patterns with strong acceleration and retardation. With the machine in accordance with the invention, the stresses on all bearings will be considerably less. The shaft journalling, the journalling of the shaft end in the shaft, the support bearing of the shaft end and the journalling unit represented by each crosshead shoe, are subjected to less stress and can therefore be designed and dimensioned in a simpler manner, with resultant savings in cost.

Since, furthermore, the pistons are mechanically connected to each other, direct power transmission is achieved from one piston to the other, so that the pistons in the pair being in opposite phases is exploited. The mechanical connection also has a reinforcing effect that increases the stability of the machine.

Another advantage of this arrangement is the possibility of constructing the pistons on one side as motor and the pistons on the other side as pump. The energy from the motor part can thus be directly exploited for energy transmission to the pump part in order to achieve a flow with constant pressure. Expansion of the propellant in the motor part is also facilitated, thanks to the reaction force appearing below the zero angle and without crank arm. The energy can then be extracted in the pump part as constant oil pressure with variable flow which, as hydraulic driving motor, can replace clutch and gear box.

The journalling between driving shaft and shaft end is achieved by the driving shaft being provided with an eccentrically arranged bearing housing in which the shaft end is joumalled for relative rotation against the driving shaft. The bearing is thus robust and firm.

The opposite end of the shaft end is support journalled, giving increased stability and operational reliability. The shaft end is connected to a four-armed Cardan body with two arms journalled in a connecting portion of the shaft end and two arms journalled in the support body. This contributes to further reducing the friction resistance of the movement transmission.

Non-return valves for working fluids are arranged either in conjunction with each cylinder or integrated with respective pistons so that, depending on the application, an efficient control of the inflow and outflow of the working fluid can be achieved.

The term "driving shaft is used in the claims. This is the case when the machine is operating as pump. When the machine is operating as motor it is a driven shaft. The term "driving shaft" shall therefore be understood to mean driven shaft in such cases.

In accordance with a preferred embodiment of the invention both parts of the ball joint are attached to the disc or piston, respectively, and the spherical journalling surfaces are situated on both sides of the disc. The sliding movement between disc and piston will therefore be extremely favourable from the friction aspect. Since, furthermore, the joumalling surfaces are situated on both sides of the disc the piston will be controlled in simple manner in both directions.

The above and other preferred embodiments of the machine in accordance with the invention are defined in the claims dependent on claim 1.

The invention will be explained in more detail in the following detailed description of preferred embodiments thereof, with reference to the accompanying drawings.
- Figure 1: is an axial section through a first embodiment of a machine, which does not belong to the invention.
- Figure 2: is an axial section through a second embodiment of a machine which does not belong to the invention.
- Figure 3: is a section along the line III-III in Figure 2.
- Figure 4: is a view from the side of component 50 in Figure 2.
- Figure 5: is a section along the line V-V in Figure 2.
- Figure 6: is a longitudinal section through a piston in Figure 2, at right angles to the plane of the figure.
- Figure 7: is a section along the line VII-VII in Figure 6.
- Figure 8: is a partial enlargement of Figure 2.

The following detailed description explains how the machine functions and is put together for pump applications. However, it should be understood that the description is also applicable in embodiments as motor, but then with reverse direction as regards power transmission.

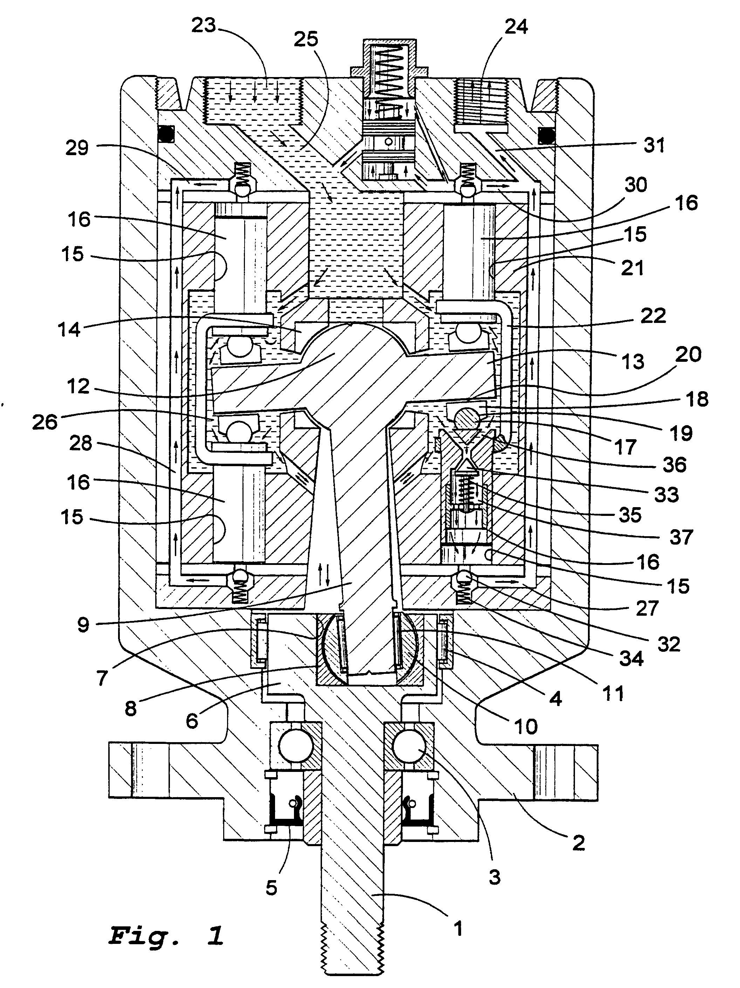

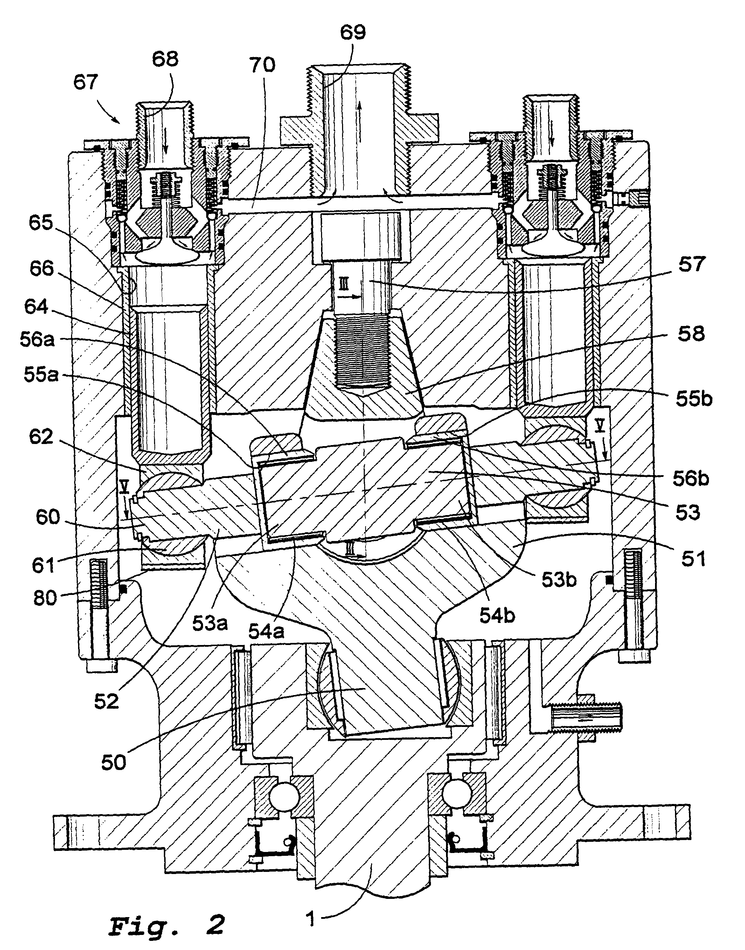

Figure 1 shows a pump in accordance with a simplified first embodiment of the invention. A driving shaft 1 is connected at its outer end to an external power source (not shown). The driving shaft 1 extends into the pump housing 2 and is journalled therein by means of ball bearings 3 and roller bearings 4. A sealing 5 is arranged where the shaft 1 enters the housing. The end of the driving shaft 1 situated inside the pump housing has a cylindrical enlargement 6 that is coaxial with the driving shaft. A cylindrical recess 7 is provided in the cylindrical enlargement 6 from the end surface. The recess 7 is eccentric in relation to the driving shaft 1. One end of a shaft end 9 is journalled in the recess by means of a ball joint. The ball joint consists of a seat 8 with an outer cylindrical surface within the recess 7. The seat has an inner spherical surface in which a spherical body 10 is pivotably journalled. The spherical body 10 has a central cylindrical boring running through it, in which the end of the shaft end is journalled by means of needle bearings 11. The opposite end of the shaft end 9 is supported. The support is of a kind simular to that shown in fig 2, but is for the sake of simplicity in fig 1 represented by a specical body 12 and a corresponding bearing. The driving shaft 1 and shaft end 9 are manufactured from suitably surface-hardened steel alloy and the seat may be manufactured from suitable copper alloy.

When the driving shaft 1 rotates, its eccentric recess 7 will describe a rotary movement about the central axis of the driving shaft, with a radius corresponding to the eccentricity. The end of the shaft end 9 in the recess 7 will consequently rotate about the central axis of the driving shaft in corresponding manner. Since the end of the shaft end 9 is rotatably joumalled in the recess 7 by means of the needle bearing 11, the shaft end will not rotate about its own axis. Since the opposite end of the shaft end 9 is fixed in the support the shaft end 9 will tilt or oscillate, i.e. the shaft end will describe a conical movement. A corresponding movement will be executed by the disc 13. A point at the periphery of the disc 13 will therefore move alternately upwards and downwards in axial direction with one movement in each direction for each revolution of the driving shaft. As should be clear, however, the disc 13 will not rotate.

A pump block 21 is arranged in the pump housing 2. This has a number of cylindrical borings 15 that constitute pump cylinders. A piston 16 is arranged for to-and-fro movement in each of these cylinders 15. The cylinders 15 are distributed along an arc on the disc 13 and are situated on both sides of the disc. An optional number of cylinders, suitable eight, can be arranged on each side. Each piston 16 co-operates with the disc 13 by means of a contact member consisting of a spherical body 17 connected to the piston, and a crosshead shoe 18. The cross-head shoe 18 has a spherical recess 19 that co-operates with the spherical body 17 and has the same diameter as this. The spherical body 17 and crosshead shoe 18 are pivotable in relation to each other. The side of the crosshead shoe 18 facing the disc 13 is provided with a flat contact surface 20, arranged to slide against the disc 13.

When, as described above, the disc 13 tilts so that each point thereon moves upwards and downwards a little way, this movement will be transmitted to an axial to-and-fro movement in each piston 16. When the right-hand part of the disc 13 in the figure moves down from the position shown it will press the piston 16 downwards in the figure, via the crosshead shoe 18 and the cylindrical body 17. The crosshead shoe 18 will then first slide radially inwards on the disc 13 and, when the mid-way position has been passed, will slide radially outwards an equivalent distance. At the same time the crosshead shoe 18 will pivot clockwise in the figure about the spherical body 17.

When the disc 13 tilts up and down, therefore, it will generate a to-and-fro movement in each of the pistons 16 to cause pumping.

Pistons situated immediately opposite each other are rigidly connected together by means of a yoke 22 so that their movements are synchronised.

As can be seen from the arrows, the opening 23 constitutes the inlet of the pump, which is connected by channels 25 to cavities in the pump block 21, thereby forming an annular suction space 26 which surrounds the disc 13 and the inwardly directed ends of the pistons 16. The spaces in the pump constituting the suction side have been marked in broken lines.

The pressure side consists of the spaces situated axially outside the pistons, the cylinders 15 and the channels 27-31, all of which are connected to the pump outlet 24.

Liquid is thus pumped in through the inlet 23 to the interior of the pump, pumped through the cylinders 15 and out via the channels 27-31 to the outlet 24.

The lower piston 15 on the right in Figure 1 is shown in cross-section. It is thus clear how the liquid is pumped. From the position shown, the piston 16 is pressed down by the disc 13. The non-return valve 33 is thus closed, whereas the non-return valve 32 is opened and the liquid forced out into the pressure channel 27. When the piston 16 has reached its lower end position it reverses and, during the upward movement, a suction is created in the space beneath the piston 16. The non-return valve 32 thus closes. At the same time the non-return valve 33 opens, overcoming the force of the spring 35 since a negative pressure prevails on the lower side. During the upward movement of the piston 16, therefore, the liquid will flow from the suction side 26, in through the channel 36 in the piston, through the valve opening 37 and down to the space below the piston 16. During the subsequent downward movement of the piston, the liquid will be pressed out through the non-return valve 32 as described above.

The material in the crosshead shoe 18 may suitably be a copper alloy. The pistons 16 should be of high quality hardened steel, similar to that usually used in bearings. The pump block 21 may be of aluminium, copper alloy or cast iron, and the housing 2 of aluminium or cast iron.

Figure 2 shows a simplified axial section of an alternative embodiment of a pump in accordance with the invention. In order to simplify the figure the pump is illustrated as having piston-cylinder-arrangements only on one side of the disc. It is however to the undustrod that corresponding arrangment also are to be present on the other side, with the pistons being arranged on each side of the disc and the aligned pistons being mechanically interconnected. The connection of the driving shaft to the inclined shaft end is in principle of the same construction as for the pump shown in Figure 1 and is therefore not described here in more detail. The shaft end is designated 50 in this figure.

It terminates in a connecting portion 51 in which the disc 52 co-operating with the pistons is journalled. The bearing comprises a Cardan body 53, substantially cruciform, having two of its arms 53a, 53b journalled in the connecting portion 51 of the shaft end 50. The connecting portion 51 is provided with two cylindrical bearing seats 55a, 55b, into which the arms 53a, 53b extend. Each bearing seat 55a, 55b is lined with a bearing sleeve 56a, 56b. The arms 53a, 53b are journalled in respective bearing sleeves by means of needle bearings 54a, 54b.

The support body 58 is secured to the pump housing by a bolt 57. The support body 58 is provided with bearing members for journalling the two other arms 53c, 53d of the Cardan body. These two arms extend at right angles to the plane of Figure 2.

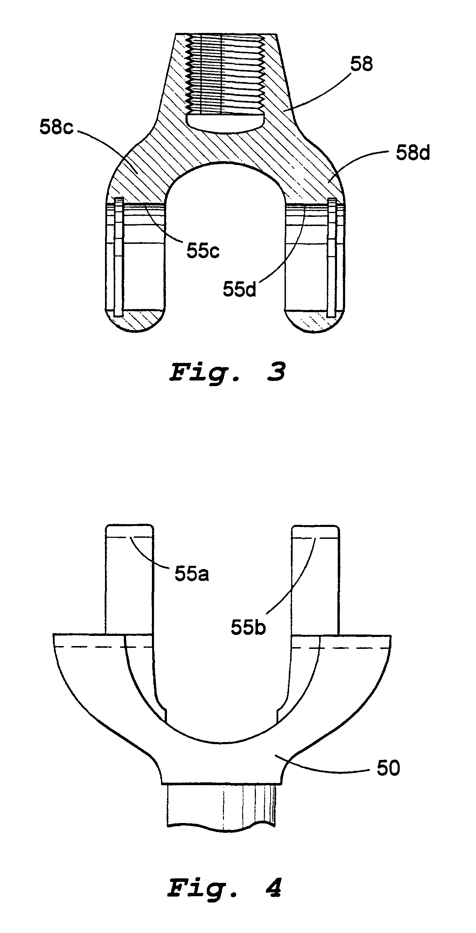

Figure 3, which is a section through the support body 58 along the line III-III in Figure 2, shows how the support body is provided with two shanks 58c, 58d, each with a through-hole with cylindrical bearing seats 55c, 55d for journalling the arms 53c, 53d of the Cardan body 53.

Figure 4 shows how the bearing seats 55a, 55b are arranged on the connecting portion 51 of the shaft end 50.

The Cardan body 53 provides firm support for the connecting body 51 which can thus follow the oscillating movement of the shaft 50 and describe a tilting movement without rotation. The needle bearings give minimal friction resistance.

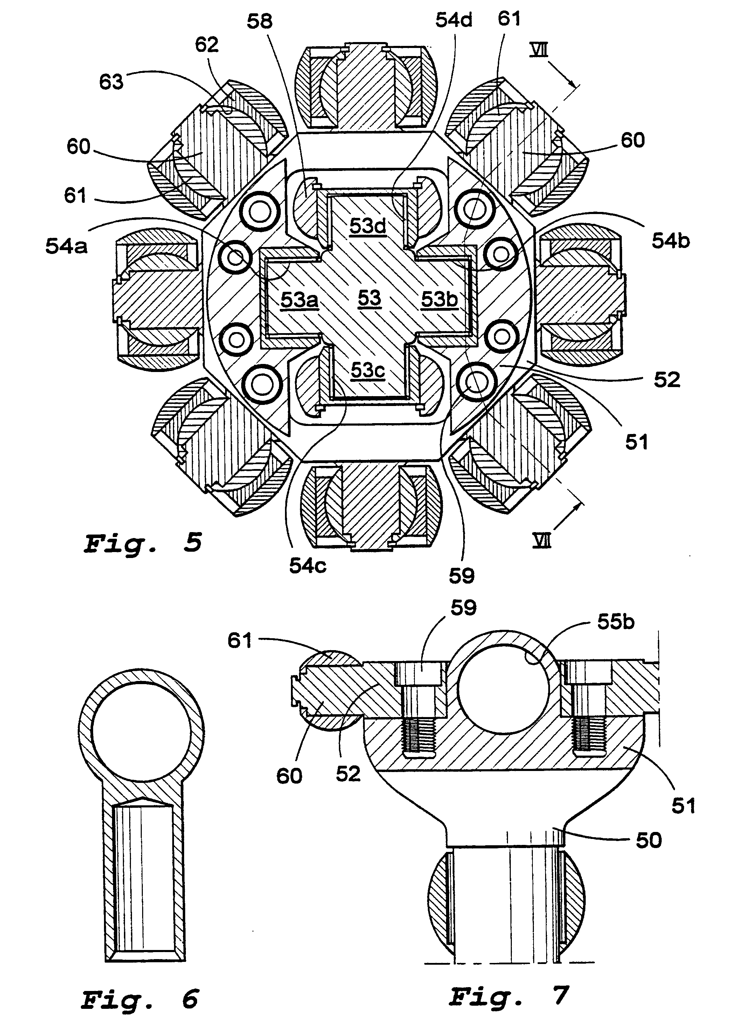

Figure 5, which is a section along the line V-V in Figure 2, shows how the connecting body 51 of the shaft end 50 is fixed to the disc 52 which passes on the tilting movement to the pistons. By means of a number of bolts 59 the connecting body 51 is secured to the disc 52 which is octagonal. Each side of the octagon has a cylindrical bearing pin 60 provided with a spherical body 16. The spherical body 61 is pivotably journalled in a ring 62 with an inner spherical surface 63 in which the spherical body 61 is pivotable. The end of the piston 64 facing the disc 52 is provided with an annular part 80 (see Figure 2), in which the ring 62 is mounted. The figure also reveals how the Cardan body 53 with its four arms 53a-53d co-operates with the connecting body 51 and support body 58 via needle bearings 54a-54d.

Figure 6, which is a longitudinal section through a piston 64, shows how its inner end is provided with an annular part 80 in which the ring 62 is mounted.

Figure 7 is a section along the line VII-VII in Figure 5 and shows how the disc 52 is secured to the connecting body 51 by means of bolts 62.

Referring again to Figure 2, rotation of the shaft 1 will cause the disc 52 to acquire a tilting, non-rotary movement so that the pins 60 move up and down in the figure. The pistons 64 connected to the pins 60 are thus forced into a to-and-fro movement in each cylinder 65 and pump liquid, as will be described below. Each cylinder 65 is lined with a sleeve 66.

A valve housing 67 is arranged at the opposite end of each piston 64, i.e. at the top in the figure. The valve housing is provided with an inlet 68 for liquid. A liquid outlet 69 is arranged centrally in the machine, the outlet being connected via channels 70 to respective valve housings 67.

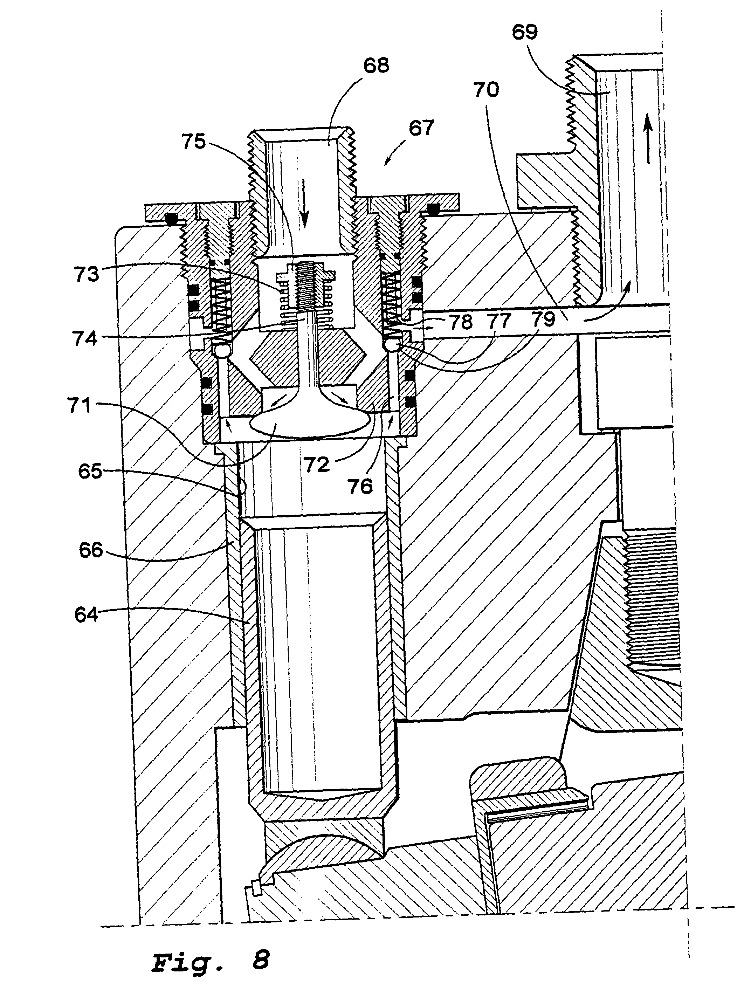

A valve housing is shown on a larger scale in Figure 8. An inlet valve with valve body 71 is arranged on the inlet side. This tightly abuts against a valve seat 72. A sleeve 75 with flange is fitted on the valve rod 74 of the valve body 71, and a compression spring 73 acts against this flange. The compression spring strives to keep the valve body 71 in contact with the valve seat 72. A number of outlet channels 76 are also arranged in the valve housing 67, each provided with a non-return valve 77 which, by means of compression springs 78 are pressed into contact with the non-return valve seat 79. The outlet channels 76 are connected to the channel 70 which leads further to the liquid outlet 69.

When the piston 64 moves downwards in the figure, a negative pressure occurs in the cylinder 65. The pressure difference thus arising over the valve on the inlet side causes the valve body 71 to be pressed down, overcoming the force of the compression spring 73. Liquid can then flow in from the inlet 68 to the cylinder 65. The pressure difference between the outlet 69 and the cylinder 65 causes the non-return valves 77 to be held closed during this phase by the springs 78.

When the piston 64 has turned and starts moving upwards again, a positive pressure is created in the cylinder 65. This causes the valve body 71 to assume closing position, while the non-return valves open. The liquid can now be forced out from the cylinder 65 via the outlet channels 76 and the channel 70 to the liquid outlet 69.

## Claims

1. A hydraulic axial-piston machine comprising a driving shaft (1) and a number of axially directed pistons (16, 64) arranged for to-and-fro movement each in its own cylinder (15, 65), provided with inlets and outlets for liquid, wherein an inclined disc (13, 52) is arranged to transmit movement between the pistons and the driving shaft, wherein the disc (13,52) is provided with a shaft end (9, 50) forming an angle with the driving shaft (1) and being connected to the driving shaft by means of a bearing (7, 8, 10, 11) that permits relative rotation between the driving shaft (1) and the shaft end (9, 50) to achieve a titling movement in the disc (13, 52) and wherein each piston (16, 64) co-operates with the disc (13, 52) via a ball joint member comprising a first part (17, 61) that has a convex spherical surface and a second part (18, 62) that has a concave spherical surface, which first part is pivotably journalled in the second part, the driving shaft (1) being journalled for rotation in the machine housing (2), and the driving shaft (1) being provided with an eccentrically arranged bearing housing (7) in which the end of the shaft end (9, 50) facing away from the disc (13) is journalled for relative rotation against the driving shaft, the other end of the shaft end being journalled in a support bearing (14, 58), which support bearing (58) comprises two coaxial cylindrical bearing surfaces (55c, 55d) in which one arm each (53c, 53d) of a four-armed Cardan body (53) is journalled and wherein the shaft end (50) is provided with a connecting portion having two coaxial cylindrical bearing surfaces (55a, 55b) in which one arm each (58a, 58b) of the four-armed Cardan body is journalled, wherein the journalling surfaces of the support bearing and the journalling surfaces of the connecting portion are oriented at right angles to each other, and either each piston cylinder (65) being provided, at its end facing away from the disc (32) with a valve housing (67) with non-return valvels (71, 79) in the inlet and outlet for the working fluid or a non-return valve (33) for the inlet for the working fluid being arranged in each piston (16), **characterized in that** pistons (16) are arranged on each side of the disc (13), the pistons (16) on different sides of the disc (13) being arranged in pairs axially in line with each other and the pistons (16) in the pair being mechanically connected (22) to each other.

2. A machine as claimed in claim 1, **characterized in that** said first part (61) is permanently connected to the disc (52) and said second part (62) is permanently connected to the piston (64) and **in that** each said convex and concave spherical surface is situated on both sides of the disc (52).

3. A machine as claimed in claim 1 , **characterized in that** said first part (17) is permanently connected to the piston (16) and **in that** said second part (18) is provided with a flat surface arranged to slide against the disc (13).

4. A machine as claimed in any of claims 1-3, **characterized in that** a ball joint (8, 10) is arranged in said bearing housing (7) and **in that** a needle bearing (11) is arranged in the ball joint, in which needle bearing said end of the shaft end (9, 50) is journalled.

5. A machine as claimed in any of claims 1-4, **characterized in that** the arms (53a-53d) of the Cardan body (53) are journalled in respective journalling surfaces (55a-55d) by means of needle bearings (56a-56d).

## Patentansprüche

1. Hydraulik-Axialkolbenmaschine, umfassend eine Antriebswelle (1) und eine Reihe von axial gerichteten Kolben (16, 64), die für Hin- und Herbewegung jeweils in ihrem eigenen Zylinder (15, 65) eingerichtet, mit Zuläufen und Ausläufen für Fluid versehen sind, wobei eine Schrägscheibe (13, 52) angeordnet ist, um Bewegung zwischen den Kolben und der Antriebswelle zu übertragen, wobei die Scheibe (13, 52) mit einem Wellenende (9, 50) versehen ist, das einen Winkel mit der Antriebswelle (1) bildet und mittels eines Lagers (7, 8, 10, 11) mit der Antriebswelle verbunden ist, das relative Drehung zwischen der Antriebswelle (1) und dem Wellenende (9, 50) ermöglicht, um ein Kippmoment in der Scheibe (13, 52) zu bewirken, und wobei ein jeder Kolben (16, 64) über ein Kugelgelenkteil mit einem ersten Teil (17, 61), das eine konvexe, kugelförmige Oberfläche hat, und mit einem zweiten Teil (18, 62), das eine konkave, kugelförmige Oberfläche hat, zusammenwirkt, wobei das erste Teil drehbar in dem zweiten Teil gelagert ist, wobei die Antriebswelle (1) drehbar gelagert ist für Drehung in dem Maschinengehäuse (2) und wobei die Antriebswelle (1) mit einem exzentrisch angeordneten Lagergehäuse (7) angeordnet ist, wobei das von der Scheibe (13) abgewandte Ende des Wellenendes (9, 50) drehbar gelagert ist für relative Drehung gegen die Antriebswelle und wobei das andere Ende des Wellenendes in einem Traglager (14, 58) drehbar gelagert ist, wobei das Traglager (58) zwei koaxiale, zylindrische Lagerflächen (55c, 55d) umfasst, wobei jeweils ein Arm (53c, 53d) eines vierarmigen Kardankörpers (53) drehbar gelagert ist und wobei das Wellenende (50) mit einem Verbindungsteil mit zwei koaxialen, zylindrischen Lagerflächen (55c, 55d) versehen ist, wobei jeweils ein Arm (58a, 58b) des vierarmigen Kardankörpers drehbar gelagert ist, wobei die drehbar gelagerten Flächen des Traglagers und die drehbar gelagerten Flächen des Verbindungsabschnittes in rechten Winkeln zueinander ausgerichtet sind und wobei ein jeder Kolbenzylinder an seinem Ende, das der Scheibe (32) abgewandt ist, mit einem Ventilgehäuse (67) mit Rückschlagventilen (71, 79) in dem Zulauf und dem Auslauf für das Arbeitsfluid oder mit einem Rückschlagventil (33) für den Zulauf für das Arbeitsfluid in jedem Kolben versehen ist, **dadurch gekennzeichnet, dass** die Kolben (16) auf unterschiedlichen Seiten der Scheibe (13) paarweise axial in einer Reihe angeordnet sind und dass die Kolben (16) in dem Paar mechanisch miteinander verbunden (22) sind.

2. Maschine nach Anspruch 1, **dadurch gekennzeichnet, dass** das erste Teil (61) dauerhaft mit der Scheibe (52) verbunden ist und dass das zweite Teil (62) dauerhaft mit dem Kolben (64) verbunden ist und dass sich die konvexe und die konkave kugelförmige Fläche auf beiden Seiten der Scheibe (52) befinden.

3. Maschine nach Anspruch 1, **dadurch gekennzeichnet, dass** das erste Teil (17) dauerhaft mit dem Kolben (16) verbunden ist und dass das zweite Teil (18) mit einer ebenen Fläche versehen ist, die so angeordnet ist, dass sie gegen die Scheibe (13) gleitet.

4. Maschine nach Ansprüchen 1 bis 3, **dadurch gekennzeichnet, dass** ein Kugelgelenk (8, 10) in dem Lagergehäuse (7) angeordnet ist und dass ein Nadellager (11) in dem Kugelgelenk angeordnet ist, wobei das Ende des Wellenendes (9, 50) in dem Nadellager drehbar gelagert ist.

5. Maschine nach Ansprüchen 1 bis 4, **dadurch gekennzeichnet, dass** die Arme (53a bis 53d) des Kardankörpers (53) in Bezug auf die jeweiligen drehbar gelagerten Flächen (55 a bis 55d) mittels Nadellagern (56a bis 56d) drehbar gelagert sind.

## Revendications

1. Machine hydraulique à pistons axiaux comprenant un arbre d'entraînement (1) et plusieurs pistons dirigés axialement (16, 64) agencés pour un mouvement d'allée et venue chacun dans son propre cylindre (15, 65), équipée d'entrées et de sorties pour le liquide, dans laquelle un disque incliné (13, 52) est agencé pour transmettre le mouvement entre les pistons et l'arbre d'entraînement, dans laquelle le disque (13, 52) est équipé d'une extrémité d'arbre (9, 50) formant un angle avec l'arbre d'entraînement (1) et connecté à l'arbre d'entraînement au moyen d'un roulement (7, 8, 10, 11) qui permet une rotation relative entre l'arbre d'entraînement (1) et l'extrémité d'arbre (9, 50) pour atteindre un mouvement d'inclinaison dans le disque (13, 52) et dans laquelle chaque piston (16, 64) coopère avec le disque (13, 52) via un élément à joint à rotule comprenant une première partie (17, 61) qui a une surface sphérique convexe et une seconde partie (18, 62) qui a une surface sphérique concave, laquelle première partie est insérée de manière pivotante dans la seconde partie, l'arbre d'entraînement (1) étant inséré à des fins de rotation dans le boîtier de la machine (2), et l'arbre d'entraînement (1) étant équipé d'un logement de roulement (7) agencé de manière excentrique dans lequel l'extrémité de l'extrémité d'arbre (9, 50) faisant face à l'opposé du disque (13) est insérée pour une rotation relative contre l'arbre d'entraînement, l'autre extrémité de l'extrémité d'arbre étant insérée dans un roulement de support (14, 58), lequel roulement de support (58) comprend deux surfaces de roulement cylindriques coaxiales (55c, 55d) dans lesquelles un bras (53c, 53d) d'un corps de cardan à quatre bras (53) est inséré et dans lequel l'extrémité d'arbre (50) est équipée d'une partie de connexion ayant deux surfaces de roulement cylindriques coaxiales (55a, 55b) dans lesquelles un bras (58a, 58b) du corps de cardan à quatre bras est inséré, dans laquelle les surfaces d'insertion du roulement de support et les surfaces d'insertion de la partie de connexion sont orientées à angle droit l'une par rapport à l'autre, et chaque cylindre de piston étant prévu, à son extrémité faisant face à l'opposé du disque (32), avec un boîtier de valve (67) avec des valves anti-retour (71,79) dans l'entrée et la sortie pour le fluide de travail ou une valve anti-retour (33) pour l'entrée pour le fluide de travail étant agencée dans chaque piston (16), **caractérisée en ce que** les pistons (16) sont agencés de chaque côté du disque (13), les pistons (16) sur différents côtés du disque (13) étant agencés en paires axialement en ligne les unes avec les autres et les pistons (16) dans la paire étant mécaniquement connectés (22) l'un à l'autre.

2. Machine selon la revendication 1, **caractérisée en ce que** ladite première partie (61) est connectée en permanence au disque (52) et ladite seconde partie (62) est connectée en permanence au piston (64) et **en ce que** chacune desdites surfaces sphériques convexe et concave est située sur les deux côtés du disque (52).

3. Machine selon la revendication 1, **caractérisée en ce que** ladite première partie (17) est connectée en permanence au piston (16) et **en ce que** ladite seconde partie (18) est équipée d'une surface plate agencée pour coulisser contre le disque (13).

4. Machine selon l'une quelconque des revendications 1 à 3, **caractérisée en ce qu'**un joint à rotule (8, 10) est agencé dans ledit logement de roulement (7) et **en ce qu'**un roulement à aiguilles (11) est agencé dans le joint à rotule, dans ledit roulement à aiguilles ladite extrémité d'extrémité d'arbre (9, 50) est insérée.

5. Machine selon l'une quelconque des revendications 1 à 4, **caractérisée en ce que** les bras (53a-53d) du corps de cardan (53) sont insérés dans des surfaces d'insertion respectives (55a-55d) au moyen de roulements à aiguille (56a-56d).
